# EUROPEAN PATENT SPECIFICATION

(11) **EP 0 823 321 B1**
(45) Date of publication and mention of the grant of the patent: **13.06.2001**
(21) Application number: 97306022.1
(22) Date of filing: 07.08.1997
(51) Int. Cl.: B29C 65/34

(54) **Joining thermoplastic cases and covers by fusion**
Verbinden eines thermoplastischen Gehäuses mit einem Deckel durch Verschmelzen
Procédé pour relier des boîtiers et des couvercles en matière thermoplastique par fusion

(30) Priority: 08.08.1996 JP 20964796; 23.10.1996 JP 28043596
(43) Date of publication of application: 11.02.1998
(73) Proprietor: TOHOKU MUNEKATA Co., Ltd., Fukushima-shi, Fukushima-Ken (JP)
(72) Inventor: Sato, Noboru, 1-chome, Fukushima-shi, Fukushima-ken (JP); Suenaga, Takashi, 1-chome, Fukushima-shi, Fukushima-ken (JP); Okamoto, Hajime, 1-chome, Fukushima-shi, Fukushima-ken (JP); Haga, Michio, 1-chome, Fukushima-shi, Fukushima-ken (JP)
(74) Representative: King, James Bertram

(56) References cited:
- FR-A- 1 372 303
- SU-A- 1 070 812
- Patent Abstracts of Japan, vol. 95, no. 9, 31 October 1995; & JP,A,9-4781 (SEKISUI CHEM CO), 07 January 1997.

## Description

This invention relates to a method and apparatus for joining and closing a case body with a cover after assembling components such as a battery or other parts into the case body.

In order to join a casing body and a cover both of which are formed from a thermoplastic material a connection may be made using ultrasonic fusion, high frequency electromagnetic induction fusion or by using a bonding agent or adhesive.

Such methods using ultrasonic high frequency electromagnetic induction may damage electronic components. Connection by adhesive bonding agent may take time as the adhesive needs to harden and occasionally the bonding agent exudes out of the faces to be joined which may stain and mar the outside appearance.

As a means for solving this problem, Japanese Unexamined Patent Publication (Kokai) No. S58-59050 and Unexamined Patent Publication (Kokai) No. S62-288029 disclose a method for trapping a heating element between the case body and the cover and fusing the thermoplastic by heating whereby the case and cover are joined. This provides an effective joint without damage to internal components and without affecting the appearance because the process is localised.

A disadvantage is that an electrode or a resistance heating element conductor by which a supply voltage is applied to the resistance heating element protrudes outside the case and may interfere during assembly of the case into a second casing. For a case body the protruding electrodes can spoil the outside appearance and provide a hazard thus, for this reason, post-processing becomes necessary to cut off the protruding portion of the electrode and conductor.

It is also possible for contaminants such as liquids to ingress through the electrode to plastic joint after fusion where they pass through the plastic case.

One object of this invention is to provide a method for thermally joining a moulded plastic product formed from a thermoplastic resin using a heating element where the voltage is applied without the ends of the resistance element projecting from the body.

Another object is to provide a method wherein the body is sealed so that the electrode does not remain exposed to form any gaps in the casing parts.

A further object is to provide a method wherein the resistance heating element is completely sealed and embedded and where the whole of the plane of the joint is fused.

According to this invention there is provided a method for connecting together two parts formed of thermoplastic materials using a heat fusion process, wherein an electric resistance heating element is located between the parts which are brought together under pressure after which an electric current is passed through the said element sufficient to melt the plastic and fuse the parts together at their junction,
characterised in that current applying electrodes are inserted into access apertures provided in a casing part to contact the heating element after which current is applied for the purpose of heating the element to melt and fuse the parts at their junction following which the electrodes are withdrawn from the apertures.

Further and preferred features of this invention are described in the appended sub-claims.

This invention is described in greater detail with reference to the drawings showing embodiments by way of examples only.

In the drawings:_
- Figure 1: is a perspective view of a battery case using the technique of Embodiment 1 of this invention,
- Figure 2: is an exploded view showing the construction of Embodiment 1,
- Figure 3: is a plan view of the main case body of Embodiment 1 from the cover side with the resistance heating element in position,
- Figure 4: is a cross section on A-A' of Figure 2,
- Figure 5: is a cross section on A-A' but with the parts assembled,
- Figure 6: is a cross section on A-A'during the fusion process,
- Figure 7: is a cross section on A-A' after fusion and before closure of the electrode hole,
- Figure 8: is a cross section on A-A' after closure of the electrode hole,
- Figure 9: is a cross section on A-A' after closure of the electrode hole by a plug,
- Figure 10: is a perspective view of a battery case using the technique of Embodiment 2 of this invention,
- Figure 11: is an exploded view showing the construction of Embodiment 2,
- Figure 12: is a cross section taken on B-B' of Figure 11,
- Figure 13: is a cross-section on B-B' but with the parts assembled,
- Figure 14: is a cross-section on B-B' during the fusion process,
- Figure 15: is a cross-section on B-B' after fusion but before closure of the electrode hole,
- Figure 16: is a cross-section on B-B' after closure of the electrode hole,
- Figure 17: is a cross-section showing a further embodiment 3 wherein the electrodes are applied from the side of the casing,
- Figure 18: shows a cross-section as in Figure 17 after heating and fusion,
- Figure 19: shows a cross-section at another portion of the casing shown in Figure 17,
- Figure 20: shows a perspective view of the case of Embodiment 3 and shown in Figures 17 to 19, and
- Figure 21: shows diagrammatically a test piece and test method used in the comparative examples.

In this invention products are moulded using a thermoplastic resin composition to form, for example, a battery case. A groove is formed on a face of the case main body part and a small diameter hole for inserting a voltage applying terminal is provided. This groove and the small diameter hole may also be formed on the side of the cover.

A protrusion may be formed around the small diameter hole which usually is circular but may be square or rectangular.

A nickel-chrome alloy, iron-chrome alloy, iron-nickel alloy or the like can be used to form the resistance heating element, and various shapes of single wire or multi-stranded wires, as well as plate shapes and the like may be selected.

The resistance heating element may preferably be formed in a ring shape in order to fuse and seal the junction all around the circumference between the case main body and the cover. As a means for forming this resistance heating element into a ring shape, both the ends of a single wire rod may be connected and, for example, a thin resistance heating plate may be punched-out using a press for formation into a ring shape. The ring shape for the resistance heating element has no free ends and forms a complete fusion seal.

In the method of this invention the resistance heating element is assembled into a groove of the main case and a cover is placed in position with mating rims with the resistance heating element trapped therebetween and pressure applied. When a voltage is applied by terminals inserted into each of two opposed small diameter holes, contact is made with the resistance heating element, and voltage is applied to heat the resistance heating element, during which plastic around the heating element is fused.

After this, the voltage is removed and the terminals withdrawn so that cooling of the fused parts takes place and the plastic hardens. As a result, the case main body and the cover are fused together and connected.

The result is a fully sealed and integrated case with no accessible resistance heating element.

### (Embodiment 1)

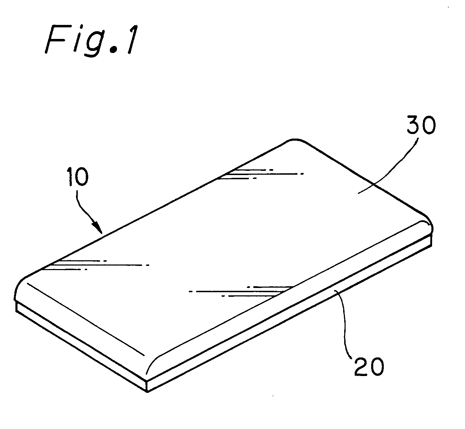

Figure 1 shows perspective view of a battery case 10 according to a first embodiment. The battery case 10 comprises a cover part 30 located on a main body part 20.

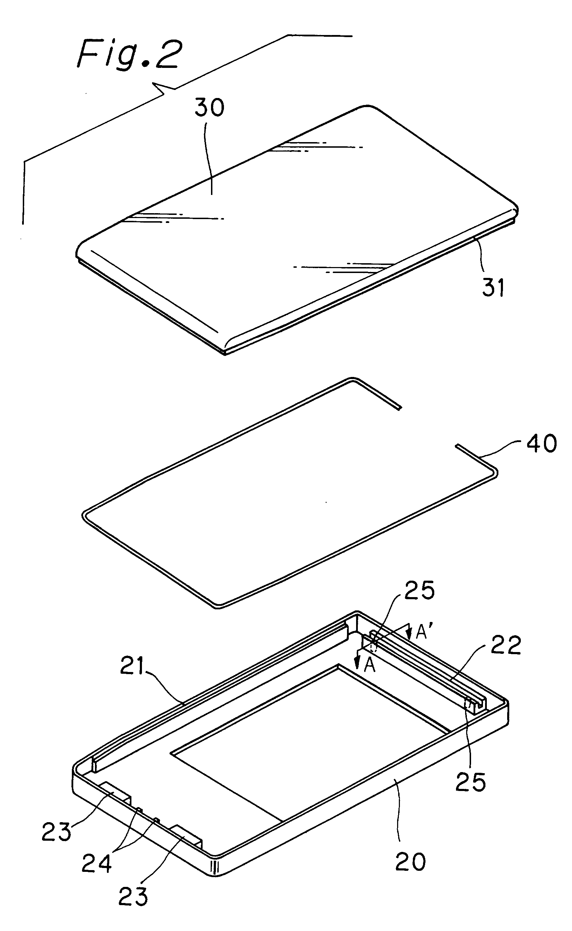

Figure 2 shows the assembly in exploded view with the battery case 10 comprising main body 20 and the cover 30 which are plastic mouldings formed from a thermoplastic resin. An electric resistance heating element 40 locates between the parts. A lower lip 31 is formed on the lower edge of cover part 30.

A channel section 21 is located on opposed sides extending in a longitudinal direction of the main body part 20 and a channel section 22 is located at an end. Retainers 23 and a rib 24 are formed for temporarily holding the resistance heating element 40 on the opposing end.

A small diameter hole 25 is drilled through the bottom face of the main body part 20 in two locations into the channel 22.

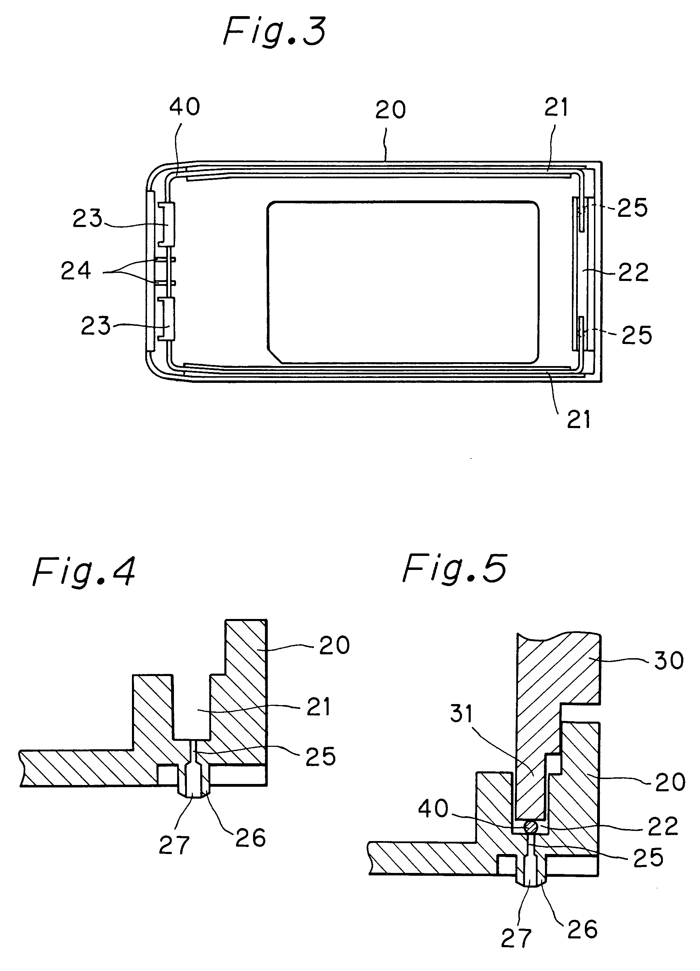

Figure 3 is a plan view seen from the side of cover 30 showing the resistance heating element 40 fitted into the main body part 20. The resistance heating element 40 is located in each channel 21 and in the channel 22 as well as being fixed by the retainers 23 and the rib 24.

Figure 4 shows the location for applying voltage to the resistance heating element 40 and is a cross-sectional view taken along the line A-A' through the hole 25 shown in Figure 2.

The small diameter hole 25 is provided at the bottom face of the main body part 20 with a protrusion 26 integrally formed around the hole 25. This defines an electric terminal guide hole 27. The internal diameter of the terminal guide hole 27 may be larger than the diameter of hole 25, to make it easier to insert a voltage applying terminal.

It is not necessary to provide a protrusion 26 when the hole 25 is not closed-off. The hole 25 may be formed when moulding the case body part 20 or may be provided afterwards.

The thermal closure method in accordance with this invention is explained with reference to Figures 5 to 8, which are cross-sectional views taken along the line A-A' of Figure 2.

The resistance heating element 40 is first inserted between the retainers 23 and the ribs 24 of the main body part 20 so that the element is trapped and then assembled into the channels 21 and 22. The element 40 is thus trapped between the main body 20 and the cover 30 after placing the cover 30 thereon and inserting the lower lip 31 into the channels 21 and 22.

The main body part 20 and the cover 30 are pressed together with sufficient force using a pressing device (not shown). Figure 5 shows the final position.

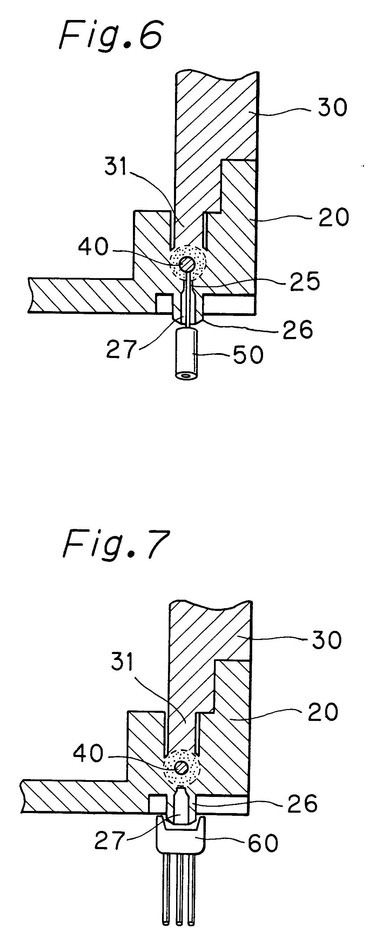

As shown in Figure 6, two voltage applying terminals 50 connected to a voltage supply controller (not shown) are inserted into the terminal holes 27 respectively and further pass through the small diameter hole 25 to contact the resistance heating element 40, after which power is applied to heat the element 40. Because of factors such as the type of plastic resin used and the size of the case as well as the material and dimensions of the element 40, the heating parameters are predetermined by the voltage supply controller.

The plastic around the periphery of the case is melted and fused by the heating action of the element 40. Thus the resin along the sides of case body 20 and on the sides of cover 30 are fused, this fusion area being indicated by the broken lines in Figure 6. If the voltage application is stopped when the resin is sufficiently fused and the terminals 50 are removed, then the fused plastics hardens and the case body part 20 and the cover part 30 are connected together.

In the present embodiment, the channel sections 21 and 22 extend along three sides, but the entire circumference can be fused if the channels are provided around the entire circumference and the ends of the resistance heating element 40 are overlapped or a ring shaped resistance heating element 40 is used.

Further, the following technique may be used for sealing and concealing the resistance heating element 40 from the outside of the case part 10. Figure 7, Figure 8 and Figure 9 show the arrangement.

The tip 60 of a disc shaped contact face is pressed against the tip of the protrusion 26 as shown in Figure 7. Then, the resin of the protrusion 26 is melted or fused, and if necessary further pressed to be collapsed by the tip 60, the resin of the fused protrusion 26 is formed into a homogeneous body.

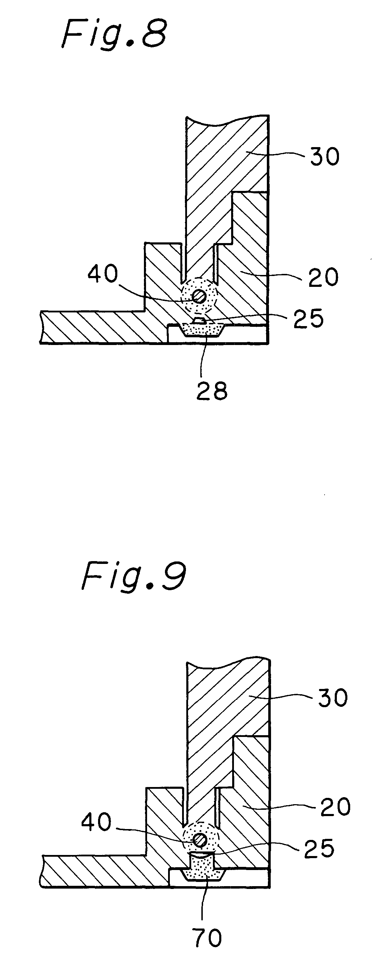

When the tip 60 is separated and cooled down, the part 28 is formed as shown in Figure 8, and as a result, the small diameter hole 26 is blocked, and the resistance heating element 40 is closed-off. The tip 60 may include a heating element.

Figure 9 shows an embodiment where a plug body 70 is fitted in the small diameter hole 25 to block the small diameter hole 25.

The tip 60 may be a heating rod, but a better finish can be obtained by using the tip of a refrigerant cooled metal strip for cooling-down after electrically heating the metallic strip.

The contact face shape of tip 60 can be formed as required to produce a cup shape, a square shape or the like.

Although the channel 21 and small diameter hole 25 for fitting and heating the element 40 are provided installed on the side of case main body 20 in this embodiment, they may also be provided on the side of cover 30, and the position can be optionally selected for convenience of the case shape and the manufacturing process.

The embodiment described relates to a thermal production method and the assembly of the resistance heating element into the moulded product which is to be thermally connected by inserting the voltage applying terminal through the small diameter hole provided in the moulded product, to make contact with the resistance heating element for the heating and fusion process. Advantages are:
1) Because the electrode for applying the voltage does not protrude from the moulded product, there is no need for further processing such as the cutting of the electrode after fusion.
2) By fusing then closing off the small diameter hole, the heating element cannot be accessed from the outside, and liquid cannot invade. The unit is thus fully sealed and protected.
3) Because the small diameter hole is moulded into the product, no operation other than assembly and contacting of the resistance heating element is needed.
4) When reopening of the case is required, insert the electrode through the (unplugged) small diameter hole, apply a voltage to the resistance heating element and separate and release the case main body and the cover while softened and replace of repair the parts contained therein, and re-close.

### (Embodiment 2)

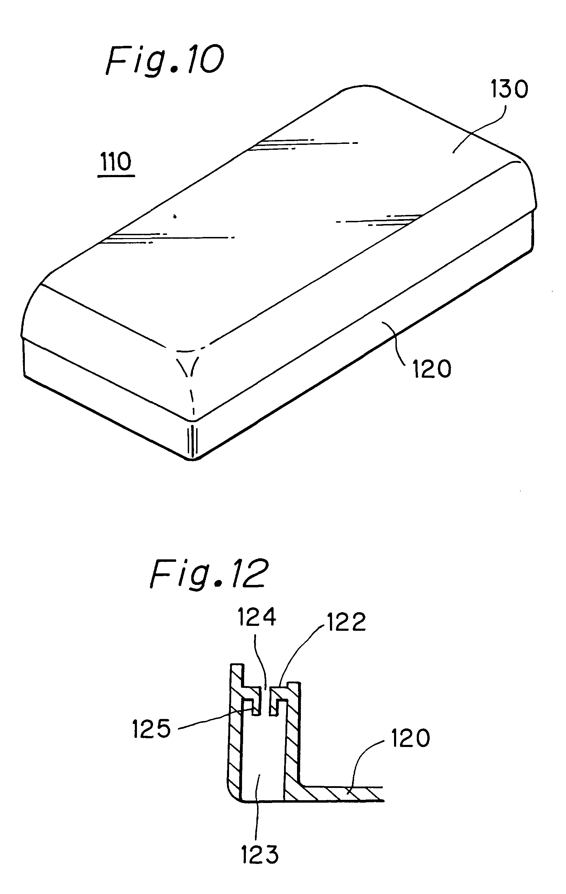

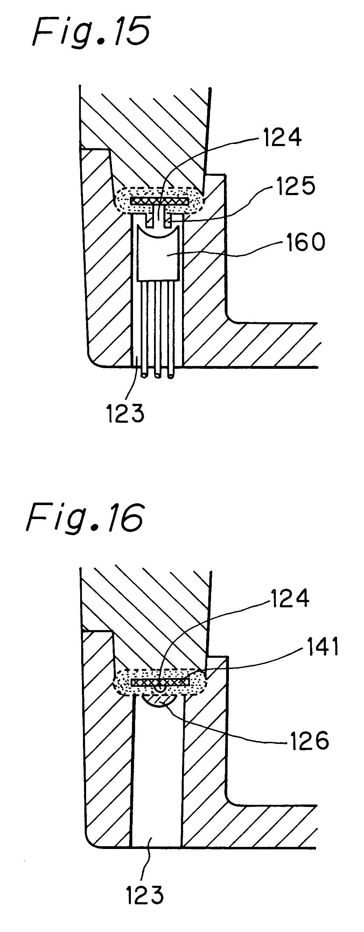

This embodiment uses a form of resistance heating element shaped into a ring so as not to leave any unfused portions of the case. Reference is made to Figures 10 through to Figure 16.

Figure 10 shows a perspective view of a battery case 110 where the case main body and the cover are joined using a ring shaped resistance heating element according to this invention. The battery case is of the shape where the cover 130 is placed on the case main body 120.

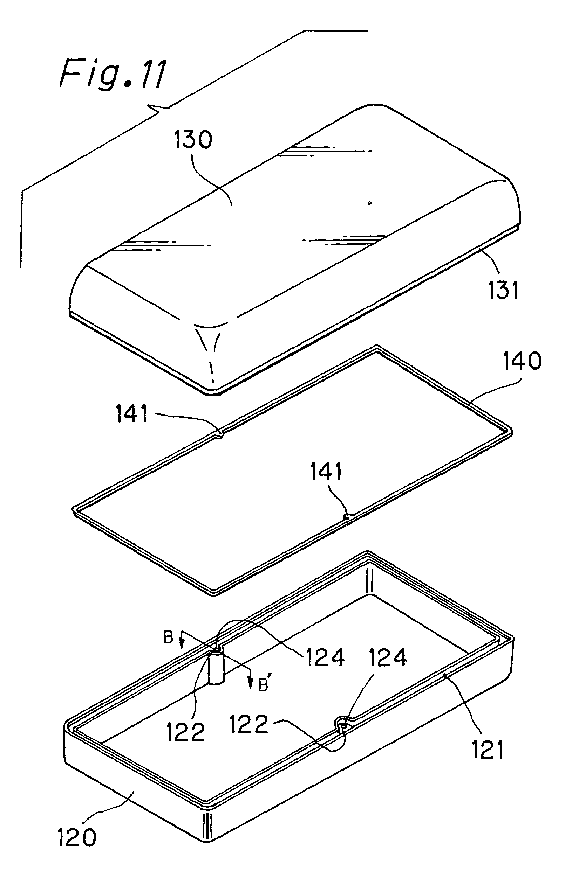

Figure 11 shows the assembly 110 in exploded perspective view, wherein the case main body 120 and the cover 130 are plastic mouldings formed from thermoplastic resin, and 140 is a ring shaped resistance heating element formed from a nickel-chrome alloy. A rim 131 is formed on the edges of cover 130.

The resistance heating element 140 has the same profile as the casing. The present embodiment uses an element material SUS 303 with thickness 0.15 mm and width 0.5 mm with two circular electrode pads 141 positioned at opposing points dividing the resistance heating element 140 into two equal sections.

The channel section 121 in the bottom case part 120 and the relieved parts 122 of approximately same shape as the two electrode pads 141 of the resistance heating element 140 are provided on the upper rim around the sides of the case part 120.

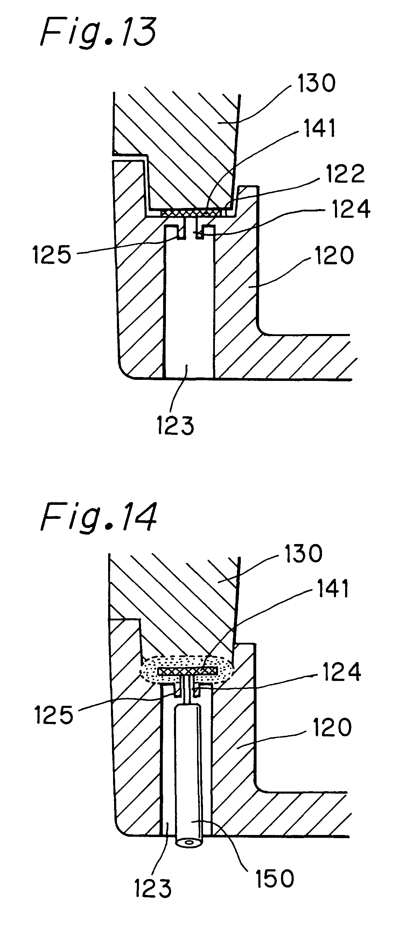

Figure 12 is a cross-sectional view taken along the line B-B' of Figure 11. The terminal guide hole 124 opens toward the bottom face of the case part 120 on the rear side of parts 122, and a small diameter hole 124 is provided toward the bottom of the main part 120 to align with the terminal guide hole 123 at the central area of 122. Integrally formed protrusion sections 125 are located around the periphery of hole 124 on the side of terminal guide hole 123. The small hole 124 may be moulded during the moulding of case 120, or may be processed or formed at a later stage.

The assembly of the resistance heating element is explained with reference to Figures 13 to Figure 16 which are the enlarged cross-section views taken along the line B-B' of Figure 11.

Figure 13 shows a view prior to fusing. The resistance heating element 140 is assembled into the channel 121 so that the electrode pads 141 of resistance heating element 140 may be located in the relieved parts 122 formed in the channel 121 so that the electrode pads 141 of resistance heating element 240 may be located in the relieved parts 122 formed in the channel 121, the cover 130 is then fitted with the lower rim forming the fusion face engaging the fusion face on the side of the main body 120. The resistance heating element 140 is trapped between the fusion faces. The body 120 and the cover 130 are pressed together with an adequate force using a clamp (not shown).

Next, as shown in Figure 14, two voltage applying terminals 150 connected to a voltage supply controller (not shown) are inserted into the respective terminal guide holes 123, and further brought into contact with the electrode pads 141 of heating element 140 through the small diameter hole 124, a voltage of AC 4V at about 1000A is applied for 2.5 seconds to heat the element 140. This heating varies according to the size of case and resin used.

The resin is fused by the heating of the resistance heating element 140 and the fused resins on the side of body 120 and on the side of cover 130 are fused to each other. This fusion zone is the area enclosed by the broken lines in Figure 14. The voltage is cut-off when a sufficiently fused state is reached and the terminal 150 is withdrawn to allow cooling down. The fused resin hardens and the case main body 120 and the cover 130 are fused and connected to each other.

The following technique may be included if the resistance heating element 140 is to be sealed from the outside of case 120 in order to hermetically seal the case 110. Figure 15 and Figure 16 show this technique.

As shown in Figure 15, a fusing tip 160 whose contact face is of cup shape is inserted into the terminal guide hole 123, and contacts the protrusion 125 around hole 124. The resin of protrusion 125 is melted and further pressed by the tip, so that the resin is shaped and fused. When the tip 160 is removed and cooled down, the part 126 formed as shown in Figure 16 blocks-off the small diameter hole 124 and the electrode pads 141 and element 140 are totally enclosed and the case 110 is hermetically sealed.

The tip 160 may be a heating rod, but a better finish can be obtained if the deposition tip of such construction can blow a refrigerant over a metallic strip to cool it down after applying a voltage to the metallic strip for the fusing operation.

In this embodiment, the small diameter hole 124 is provided on the side of the main body 120 and the voltage impressing terminal 150 is forced against the electrode pads 141 of element 140 from the rear of body 120, but it is also possible to provide the hole 124 on the side of cover 130 and the position of small diameter hole 124 can be optionally elected in view of the particular shape of the case and the manufacturing process.

The electrode pad 141 is located on the resistance heating element but this is not essential where the voltage impressing terminal can be brought into good contact with the resistance heating element itself.

### (Embodiment 3)

This embodiment relates to a method for contacting the voltage impressing terminal from a lateral face onto the resistance heating element located between the main body of the case and the cover.

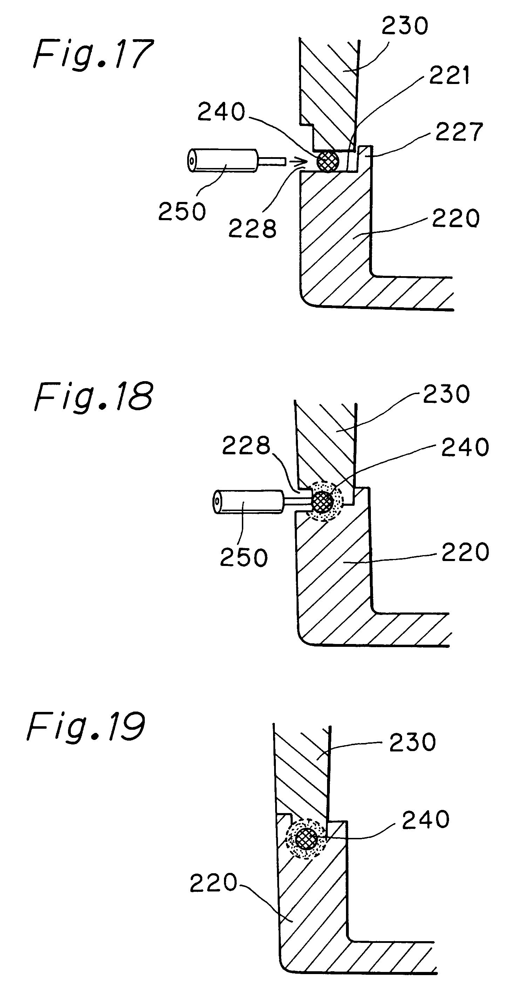

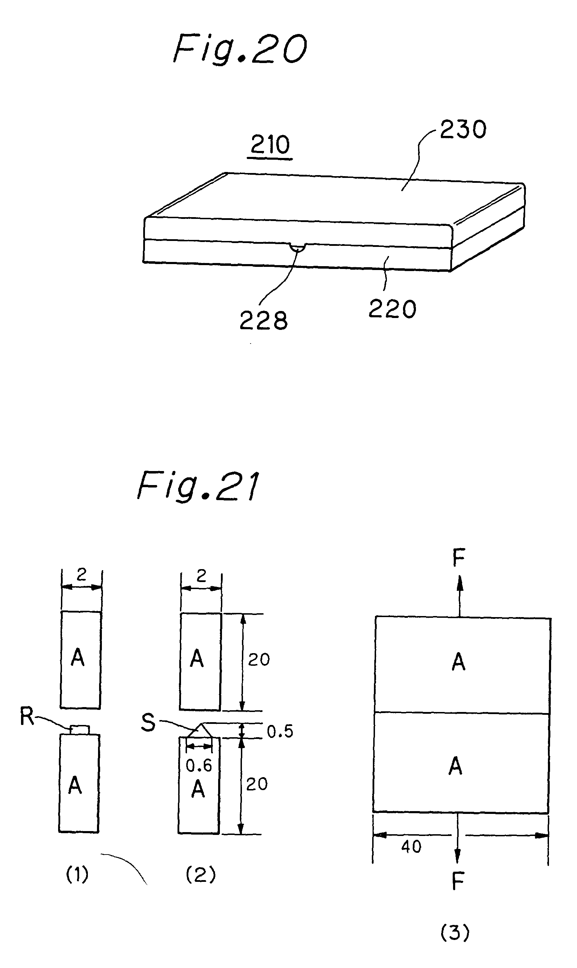

Figures 17 to Figure 19 show cross-sectional view of the relevant part, while Figure 20 shows a complete perspective view of case 210.

The channel 221 has an opening 228 facing the outside of the main case body 220 with an inner rib 227 and at two opposed sides of the case. The openings provide access to the resistance heating element 240 approximately dividing the element 240 into two parts.

For the fused connection the resistance heating element 240 is seated into the channel 221 formed around the case body side wall 220 as shown in Figure 17. The cover 230 is then positioned and the lower rim mated with the opposed face on the main body 220, with the resistance heating element 240 trapped between the faces to be fused. The same procedures as those of Embodiments 1 and 2 are adopted and the case main body 220 and the cover 230 are pressed together with an adequate force using a press (not shown). The resistance heating element 240 is thus exposed at two opposed places through apertures 228 in the main body 220. The voltage impressing terminals 250 can be pressed against the sections of exposed resistance heating element 240, and voltage applied as shown in Figure 18, the resistance heating element 240 is thus heated and the fusion zone shown by the dotted lines is formed. After cooling the main body 220 and the cover 230 are fused together.

Figure 19 shows a cross-section view of the fusion zone along the channel 221 away from apertures 228. Figure 20 shows a complete assembly and the position of apertures.

### (Comparison Example)

The tensile strength of an ultrasonic fusion method which is customary in the art of joining thermoplastic resin was compared with the method of this invention shown in Embodiment 2.

Table 1 indicates the result.

The moulded piece shown in Figure 21 formed from an ABS plastic resin was used as the test piece.

Referring to this Fig 21 the test (1) used the trapped resistance heating element R formed from SUS 304 on one side of the test piece A, and a voltage of AC 4V (6A) was applied to the said heating element for the thermal fusion.

The test (2) used an ultrasonic method with integrally moulded rib S whose cross-section was triangular. Both the faces were brought into contact with each other for the fusion in the test piece A. The units for the figures in the drawings are mm.

The tensile direction when taking the measurement of tensile strength is shown in (3).

The measured results showed approximately the same tensile strength for both cases.

Therefore, it can be said that in this invention wherein the deposition can be made instantaneously and safely using the resistance heating element is superior to the supersonic wave deposition method which involves a risk of inducing defective joints and risk to any incorporated electronic parts and the like.

**(Table 1)**

| Tensile strength tester: Manufactured by Toyo PrecisionDevice Fabrication Co. Ltd. *Universal Tensile Tester Model V10-C* | | |
|---|---|---|
| Material of test piece (A) : ABS plastic resin | | |
| Bonding Method Employed | Sample No. | Tensile Strength of Unit Area |
| Resistance heating element | 1. | 22.05 N/mm² |
| Resistance heating element | 2. | 22.44 |
| Resistance heating element | 3. | 23.32 |
| Ultrasonic bonding process | 4. | 19.99 |
| Ultrasonic bonding process | 5. | 20.29 |
| Ultrasonic bonding process | 6. | 20.97 |

According to the embodiments, using the ring shaped resistance heating element in the moulded casing, the following advantages occur:

The electrode for applying the voltage does not protrude from the outside of the product and there is thus no need for a secondary operation of cutting the electrode.

Where the resistance heating element is of ring shape, the entire joint plane can be fused giving enhanced strength and enhanced sealing.

A hermetically sealed plastic case can be manufactured by closing the small diameter holes for applying the voltage, and fusing this part after connection to block the electrode holes.

The resistance heating element can be produced efficiently by stamping the resistance heating from thin plate.

If an optional concave section or ridge on the surface of resistance heating element is provided, the junction strength between the main body and the cover can be enhanced.

## Claims

1. A method for connecting together two parts (20,30) formed of thermoplastic materials using a heat fusion process, wherein an electric resistance heating element (40) is located between the parts which are brought together under pressure after which an electric current is passed through the said element sufficient to melt the plastic and fuse the parts together at their junction, **characterised in that** current applying electrodes (50) are inserted into access apertures (25) provided in a casing part to contact the heating element (40) after which current is applied for the purpose of heating the element to melt and fuse the parts at their junction following which the electrodes are withdrawn from the apertures.

2. A method in accordance with Claim 1, characterised in that the access apertures (25) are closed-off after withdrawal of the electrodes (50) by melting, pressing and collapsing the plastic material (26) around the apertures.

3. A method in accordance with Claim 1, characterised in that the access apertures (25) are closed-off after withdrawal of the electrodes by inserting plugs (70).

4. A method in accordance with any preceding Claim, characterised in that the parts (20,30) form a casing (10) having a body (20) and a lid (30) with a rim (31) which engages a channel (21) in the body (20), the heating element (40) being provided in the channel (21), the heating element (40) being pre-assembled into the channel (21) which has the externally accessible apertures (25), following which components are located in the body, if required, the lid rim (31) being then engaged with the channel (21) and the electrodes (50) thereafter inserted through the apertures (25) to apply current to the heating element.

5. A method in accordance with any preceding Claim, characterised in that the access apertures (25) are located adjacently in the casing the heating element (40) comprising a loop with the ends brought together for contact by an electrode (50) adjacent a respective aperture.

6. A method in accordance with any preceding Claim 1 to 4, characterised in that the access apertures (124) are located one on each opposite side of the casing (121), the heating element (140) comprising a continuous loop with opposed contact pads (141) accessible through respective apertures.

7. A method in accordance with any preceding Claim, characterised in that the current applying electrodes comprise probes (50) inserted through the access apertures (25) from the outside to contact the element (40) lying in the plane of the junction between the two parts.

8. A method in accordance with any preceding Claim, characterised in that the access apertures (25) are formed in the casing by a drilling operation after which the electrodes (50) are inserted.

9. A moulded product, especially a two-part casing for housing components such as electrical batteries, and comprising two parts (20,30) formed of thermoplastic materials and which are joined together using a heat fusion process, wherein an electric resistance heating element (40) is located between the parts which are brought together under pressure after which an electric current is passed through the said element sufficient to melt the plastic and fuse the parts together at their junction, **characterised in that** externally opening current applying electrode access apertures (25) are provided in one casing part (20) through which contact may be made between the internally located heating element (40) and the electrodes.

10. A moulded product as claimed in Claim 9, characterised in that the heating element is located in a channel (21,22,121,221) of one casing part (20, 120, 220) the access apertures (25, 124, 228) being provided through the wall of a casing part to expose a portion of the heating element.

11. A moulded product in accordance with Claim 9 or 10, characterised in that the heating element comprises a wire (40) formed into a discontinuous loop, each end of the wire being adjacent but spaced and aligned with an aperture (25) such that a current applying probe (50) passed through the aperture (25) may electrically contact respective ends of the wire loop (40).

12. A moulded product according to Claim 9 or 10, characterised in that the element (140) is of ring shape, the apertures (124) being provided at diametrically opposed locations in the casing (120) such that current applying probes (150) passed through the apertures may electrically contact respective opposed sides (141) of the element (140).

13. A moulded product according to any preceding Claim 9 to 12, characterised by a plurality of electrode access apertures (25, 124, 228) extending through one or other or both casing parts (20, 30, 120, 130, 220, 230).

14. A moulded product according to any preceding Claim 9 to 13, characterised in that the heating element is formed from a thin plate (140) by a stamping operation, the parts of the element adapted to be contacted by the electrodes comprising contact pads (141) each located adjacent an access aperture (124).

15. A moulded product according to any preceding Claim 9 to 14, characterised in that the product comprises a lower casing (20, 120, 220) with an upstanding wall having a channel (21, 122, 221) receiving the element (40, 140, 240) and a top cover (30, 130, 230) having a rim to engage the channel, the element comprising a planar ring (40, 140) lying on the plane of the junction between the casing and cover, the parts at the junction being fusible on application of heating current to the element.

16. A moulded product according to an one of Claims 9 to 15, characterised in that the access apertures (25, 124, 228) have an outwardly extending boss of enlarged diameter (26, 125, 228) which is adapted to be melted and collapsed to close the aperture or which is adapted to receive a plug (70) to close the aperture.

17. A moulded product according to any preceding claim 9 to 16, characterised in that the apertures (228) are provided in the sides of the casing (220).

18. A moulded product in accordance with any preceding Claim 9 to 17, characterised in the casing houses a battery unit.

## Patentansprüche

1. Verfahren zum Verbinden zweier Teile (20, 30) aus thermoplastischem Material unter Anwendung eines thermischen Schweißverfahrens, bei dem zwischen den unter Druck zusammenzufügenden Teilen ein elektrisches Widerstandsheizelement (40) angeordnet ist, und bei dem dieses Element anschließend ein Strom durchfließt, dessen Energiezufuhr ausreicht, um den Kunststoff zu schmelzen und die Teile an ihren Fügeflächen zu verschweißen, **dadurch gekennzeichnet,** dass stromzuführende Elektroden (50) in Zugangsöffnungen (25) eingesetzt werden, die in einem Gehäuseteil vorgesehen sind und das Heizelement (40) berühren und dass anschließend Strom zugeführt wird, um das Heizelement aufzuheizen, damit die Teile an ihren Fügeflächen schmelzen und verschweißen, wonach die Elektroden aus den Öffnungen entfernt werden.

2. Verfahren nach Anspruch 1, **dadurch gekennzeichnet,** dass die Zugangsöffnungen (25) nach Entfernung der Elektroden (50) durch Schmelzen, Drücken und Einsinken des die Öffnungen umgebenden Kunststoffes (26) geschlossen werden.

3. Verfahren nach Anspruch 1, **dadurch gekennzeichnet,** dass die Zugangsöffnungen (25) nach Entfernung der Elektroden durch Einsetzen von Stopfen (70) geschlossen werden.

4. Verfahren nach einem der vorhergehenden Ansprüche, **dadurch gekennzeichnet,** dass die Teile (20, 30) ein Gehäuse (10) mit einem Körper (20) und einem Deckel (30) mit einem Rand (31) bilden, der in eine Rille (21) im Körper (20) eingreift, dass das Heizelement (40) in der Rille (21) angeordnet ist und das Heizelement (40) in der Rille (21) vorinstalliert ist, die auch die von außen zugänglichen Öffnungen (25) aufweist, wonach gegebenenfalls Komponenten in den Körper eingesetzt werden, und dass anschließend der Deckrand (31) in die Rille (21) eingedrückt wird und die Elektroden (50) danach durch die Öffnungen (25) zwecks Stromzuführung an das Heizelement eingesetzt werden.

5. Verfahren nach einem der vorhergehenden Ansprüche, **dadurch gekennzeichnet,** dass die Zugangsöffnungen (25) im Gehäuse nebeneinander liegen und das Heizelement (40) eine Schleife bildet, deren Enden zwecks Kontakt mit einer Elektrode im Bereich der jeweiligen Öffnung zusammengebracht werden.

6. Verfahren nach einem der vorhergehenden Ansprüche 1 bis 4, **dadurch gekennzeichnet,** dass jeweils eine der Zugangsöffnungen (124) an einer der sich gegenüberliegenden Seiten des Gehäuses (121) vorgesehen ist, dass das Heizelement (140) eine Endlosschleife mit einander gegenüberliegenden Auflageflächen (141) ist, die
über die jeweilige Öffnung zugänglich sind.

7. Verfahren nach einem der vorhergehenden Ansprüche, **dadurch gekennzeichnet,** dass die stromzuführenden Elektroden Mundstücke (50) aufweisen, die durch die Zugangsöffnungen (25) von außen eingeführt werden und das Element (40) berühren, das in der- Fügeebene zwischen den beiden Teilen liegt.

8. Verfahren nach einem der vorhergehenden Ansprüche, **dadurch gekennzeichnet,** dass die Zugangsöffnungen (25) im Gehäuse durch Bohren eingebracht werden, wonach die Elektroden (50) eingesetzt werden.

9. Formteil, insbesondere ein zweiteiliges Gehäuse zur Aufnahme von Bauteilen wie elektrische Batterien, das zwei Teile (20, 30) aus thermoplastischem Material umfasst, die durch ein thermisches Schweißverfahren zusammengefügt werden, wobei ein elektrisches Widerstandsheizelement (40) zwischen den durch Druck zusammenzufügenden Teilen vorgesehen ist, wonach ein elektrischer Strom durch dieses Element fließt, dessen Energiezufuhr ausreicht, um den Kunststoff zu schmelzen und die Teile an ihren Fügeflächen verschweißt, **dadurch gekennzeichnet,** dass nach außen zu offene Zugangsöffnungen (25) in einem Gehäuseteil (20) vorgesehen sind, welche die Strom zuleitenden Elektroden zum Herstellen der elektrisch leitenden Verbindung zwischen dem innenliegenden Heizelement (40) und den Elektroden aufnehmen.

10. Formteil nach Anspruch 9, **dadurch gekennzeichnet,** dass das Heizelement in einer Rille (21, 22, 121, 221) in einem Gehäuseteil (20, 120, 220) liegt, dass die Zugangsöffnungen (25, 124, 228) die Wandung eines Gehäuseteils durchsetzen und einen Abschnitt des Heizelementes freilegen.

11. Formteil nach Anspruch 9 oder 10, **dadurch gekennzeichnet,** dass das Heizelement aus einem Draht (40) in Form einer offenen Schleife besteht und jedes freie Ende des Drahtes im Bereich, aber mit Abstand mit einer Öffnung (25) fluchtend angeordnet ist, so dass ein Strom zuleitendes Mundstück (50) durch die Öffnung (25) einführbar ist und mit dem jeweils zugeordneten Ende der Drahtschleife (40) elektrischen Kontakt herstellt.

12. Formteil nach Anspruch 9 oder 10, **dadurch gekennzeichnet,** dass das Element (140) Ringform hat, die Öffnungen (124) im Gehäuse (120) an einander gegenüberliegenden Stellen vorgesehen sind, so dass Strom zuführende Mundstücke (150) durch die Öffnungen einführbar sind und mit einander jeweils gegenüberliegenden Seiten (141) des Elementes (140) elektrisch verbunden sind.

13. Formteil nach einem der vorhergehenden Ansprüche 9 bis 12, **gekennzeichnet** durch eine Vielzahl von Elektroden-Zugangsöffnungen (25, 124, 228), die jeweils das eine oder das andere Gehäuseteil (20, 30, 120, 130, 220, 230) oder beide durchsetzen.

14. Formteil nach einem der vorhergehenden Ansprüche 9 bis 13, **dadurch gekennzeichnet,** dass das Heizelement aus einem ausgestanzten dünnen Plättchen (140) besteht, und dass die mit den Elektroden elektrisch leitend zu verbindenden Teile des Elementes Kontaktflächen (141) aufweisen, die jeweils im Bereich einer Zugangsöffnung (124) liegen.

15. Formteil nach einem der vorhergehenden Ansprüche 9 bis 14, **dadurch gekennzeichnet,** dass das Formteil ein unteres Gehäuseteil (20, 120, 220) mit einer nach oben stehenden Wandung mit einer das Element (40, 140, 240) aufnehmenden Rille (21, 122, 221) aufweist und ein oberes Gehäuseteil (30, 130, 230) mit einem in die Rille eingreifenden Rand, dass ein ebener Ring (40, 140) in der Fügeebene zwischen Gehäuseober- und
-unterteil vorgesehen ist, dass die Fügeflächen durch Anwendung eines Heizstromes auf das Element verschweißbar sind.

16. Formteil nach einem der vorhergehenden Ansprüche 9 bis 15, **dadurch gekennzeichnet,** dass die Zugangsöffnungen (25, 124, 228) einen nach außen vorstehenden Ansatz größeren Durchmessers (26, 125, 228) aufweisen, der schmelzbar und zum Schließen der Öffnung einsinkbar oder zur Aufnahme eines Stopfens (70) zum Verschließen der Öffnung ausgebildet ist.

17. Formteil nach einem der vorhergehenden Ansprüche 9 bis 16, **dadurch gekennzeichnet,** dass die Öffnungen (228) in den Seiten des Gehäuses (220) vorgesehen sind.

18. Formteil nach einem der vorhergehenden Ansprüche 9 bis 17, **dadurch gekennzeichnet,** dass das Gehäuse eine Batterie aufnimmt.

## Revendications

1. Un procédé pour connecter ensemble deux pièces (20,30) formées en matériaux thermoplastiques en utilisant un procédé de thermosoudure, selon lequel un élément chauffant à résistance électrique (40) est placé entre les pièces qui sont amenées ensemble sous pression, après quoi un courant électrique est passé à travers ledit élément en quantité suffisante pour fondre le plastique et fusionner les pièces ensemble à leur jonction, **caractérisé en ce que** les électrodes applicatrices de courant (50) sont insérées dans des ouvertures d'accès (25) prévues dans une partie de boîtier pour contacter l'élément chauffant (40), après quoi le courant est appliqué dans le but de chauffer l'élément pour fondre et fusionner les pièces à leur jonction, suite à quoi les électrodes sont extraites hors des ouvertures.

2. Un procédé selon la Revendication 1, caractérisé en ce que les ouvertures d'accès (25) sont refermées, après l'extraction des électrodes (50), par fusion, pression et aplatissement du matériau plastique (26) autour des ouvertures.

3. Un procédé selon la Revendication 1, caractérisé en ce que les ouvertures d'accès (25) sont refermées, après l'extraction des électrodes, par insertion d'obturateurs (70).

4. Un procédé selon l'une quelconque des revendications précédentes, caractérisé en ce que les pièces (20,30) forment un boîtier (10) ayant un corps (20) et un couvercle (30) avec un bord (31) qui s'engage avec une rainure (21) dans le corps (20), l'élément chauffant (40) étant prévu dans la rainure (21), l'élément chauffant (40) étant préassemblé dans la rainure (21) qui a les ouvertures (25) accessibles de l'extérieur, après quoi les composants sont placés dans le corps, si besoin est, le bord (31) du couvercle étant alors engagé avec la rainure (21), et les électrodes (50) sont ensuite introduites à travers les ouvertures (25) pour appliquer le courant à l'élément chauffant.

5. Un procédé selon l'une quelconque des revendications précédentes, caractérisé en ce que les ouvertures d'accès (25) sont placées adjacentes l'une à l'autre dans le boîtier, l'élément chauffant (40) comportant une boucle dont les extrémités sont réunies ensemble pour le contact par une électrode (50) adjacente à une ouverture respective.

6. Un procédé selon l'une quelconque des Revendications 1 à 4, caractérisé en ce que les ouvertures d'accès (124) sont placées une sur chaque côté opposé du boîtier (121), l'élément chauffant (140) comportant une boucle continue avec des pastilles de contact (141) opposées accessibles à travers des ouvertures respectives.

7. Un procédé selon l'une quelconque des revendications précédentes, caractérisé en ce que les électrodes applicatrices de courant se composent de sondes (50) introduites à travers les ouvertures d'accès (25) à partir de l'extérieur pour contacter l'élément (40) qui se trouve dans le plan de la jonction entre les deux pièces.

8. Un procédé selon l'une quelconque des revendications précédentes, caractérisé en ce que les ouvertures d'accès (25) sont formées dans le boîtier par une opération de perçage après laquelle les électrodes (50) sont introduites.

9. Un produit moulé, spécialement un boîtier en deux parties pour loger des composants tels que des batteries électriques, et comprenant deux parties (20,30) formées en matériaux thermoplastiques et qui sont jointes ensemble par un procédé de thermosoudure, selon lequel un élément chauffant à résistance électrique (40) est placé entre les pièces qui sont amenées ensemble sous pression, après quoi un courant électrique est passé à travers ledit élément en quantité suffisante pour fondre le plastique et fusionner les pièces ensembles à leur jonction, **caractérisé en ce que** des ouvertures d'accès s'ouvrant vers l'extérieur (25) pour les électrodes applicatrices de courant sont prévues dans une partie (20) du boîtier, ouvertures à travers lesquelles un contact peut être établi entre l'élément chauffant (40) placé à l'intérieur et les électrodes.

10. Un produit moulé selon la Revendication 9, caractérisé en ce que l'élément chauffant est placé dans une rainure (21,22,121,221) d'une partie (20,120,220) du boîtier, les ouvertures d'accès (25,124,228) étant prévues à travers la paroi d'une partie de boîtier pour exposer une portion de l'élément chauffant.

11. Un produit moulé selon la Revendication 9 ou 10, caractérisé en ce que l'élément chauffant comporte un fil (40) formé en une boucle discontinue, chaque extrémité du fil étant adjacente à une ouverture (25) mais écartée de celle-ci et alignée avec elle, de sorte qu'une sonde applicatrice de courant (50) qui traverse l'ouverture (25) peut contacter électriquement les extrémités respectives de la boucle de fil (40).

12. Un produit moulé selon la Revendication 9 ou 10, caractérisé en ce que l'élément (140) est de forme annulaire, les ouvertures (124) étant prévues à des emplacements diamétralement opposés dans le boîtier (120) de sorte que les sondes applicatrices de courant (150) passées à travers les ouvertures peuvent contacter électriquement des côtés opposés respectifs (141) de l'élément (140).

13. Un produit moulé selon l'une quelconque des Revendications 9 à 12 précédentes, caractérisé par une pluralité d'ouvertures d'accès pour électrodes (25,124,228) qui se prolongent à travers l'une des parties de boîtier ou les deux (20,30,120,130,220,230).

14. Un produit moulé selon l'une quelconque des Revendications 9 à 13 précédentes, caractérisé en ce que l'élément chauffant est formé à partir d'une plaque mince (140) par une opération d'estampage, les parties de l'élément adaptées pour être contactées par les électrodes comportant des pastilles de contact (141), chacune placée adjacente à une ouverture d'accès (124).

15. Un produit moulé selon l'une quelconque des Revendications 9 à 14 précédentes, caractérisé en ce que le produit comporte un boîtier inférieur (20,120,220) avec une paroi dressée vers le haut ayant une rainure (21,122,221) qui reçoit l'élément (40,140,240) et un couvercle supérieur (30,130,230) ayant un bord pour engager la rainure, l'élément comportant un anneau plat (40,140) qui s'étend dans le plan de la jonction entre le boîtier et le couvercle, les parties à la jonction étant fusibles sur application d'un courant de chauffage à l'élément.

16. Un produit moulé selon l'une quelconque des Revendications 9 à 15, caractérisé en ce que les ouvertures d'accès (25,124,228) ont un bossage de diamètre plus grand (26,125,228) qui s'étend vers l'extérieur et qui est adapté pour être fondu et aplati pour refermer l'ouverture ou qui est adapté pour recevoir un obturateur (70) pour fermer l'ouverture.

17. Un produit moulé selon l'une quelconque des Revendications 9 à 16 précédentes, caractérisé en ce que les ouvertures (228) sont prévues dans les côtés du boîtier (220).

18. Un produit moulé selon l'une quelconque des Revendications 9 à 17 précédentes, caractérisé en ce que le boîtier renferme une unité de batterie.
